Europäisches Patentamt

European Patent Office

Office européen des brevets

(19)

(11) Publication number: **0 293 520 B1**

# EUROPEAN PATENT SPECIFICATION

(12)

(45) Date of publication of patent specification: **03.04.91**　　(51) Int. Cl.⁵: **A01K 5/00**

(21) Application number: **87201163.0**

(22) Date of filing: **17.06.87**

(54) Fodder dosing apparatus.

(30) Priority: **04.06.87 NL 8701309**

(43) Date of publication of application:
**07.12.88 Bulletin 88/49**

(45) Publication of the grant of the patent:
**03.04.91 Bulletin 91/14**

(84) Designated Contracting States:
**DE FR GB IT NL**

(56) References cited:
**FR-A- 1 475 012**

(73) Proprietor: **Farco B.V.**
**Vuurtorenweg 18a**
**NL-8531 HJ Lemmer(NL)**

(72) Inventor: **Bakker, Beert**
**Trekkersweg 1a**
**NL-8508 RN Delfstrahuizen(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

Rank Xerox (UK) Business Services

## Description

This invention relates to a fodder dosing apparatus, suitable in particular for slop fodder.

For dosing fodder to pigs, among other animals, use has hitherto often been made of dosing augers. A drawback going with these augers is that these, in actual fact, are unsuitable for dosing slop fodder and, moreover, are not very accurate.

Fr-A-1475012 discloses an apparatus for distributing fodder in predetermined quantities to animals, e.g. cows.

This known apparatus may be used for dosing slop fodder or fodder containing lumps. The known apparatus comprises a horizontal cylinder in which a container for receiving fodder is provided. The cylinder can be rotated from a first position in which the container may be filled through a hopper provided above the cylinder, into a second position in which the fodder will fall from the container into a manger. A problem of the known apparatus is, that fodder may form a cake on the walls of the container, so that the fodder rations will vary unless the container is cleaned very often indeed. Moreover, when used for fodder containing lumps the cylinder may become jammed because of one of more lumps located between the rear edge of the container and the lower edge of the hopper.

Consequently, there is a need for a dosing apparatus that is particularly suitable for slop fodder and which operates accurately. Preferably, the dosing apparatus should also be suitable for dry fodder, such as pellet fodder.

It is an object of the present invention to satisfy this need. To that end, according to the present invention, a dosing apparatus of the above described type is characterized by a cylindrical container and an hourglass-shaped piston formed of two conical bodies arranged with their apices toward each other, said piston being reciprocatable in the container by means of a piston rod between a filling position, wherein the space between the hourglass-shaped piston and the inner wall of the container will be filled with fodder, and a dosing position, wherein fodder contained in said space can be dispensed.

Some embodiments of the present invention will now be described, by way of example, with reference to the accompanying drawings, in which:

Fig. 1 is a cross-sectional view of a first embodiment of a dosing apparatus according to the present invention in the filling position;

Fig. 2 shows the dosing apparatus of Fig. 1 in the dosing position; and

Fig. 3 shows a second embodiment of a dosing apparatus according to the present invention.

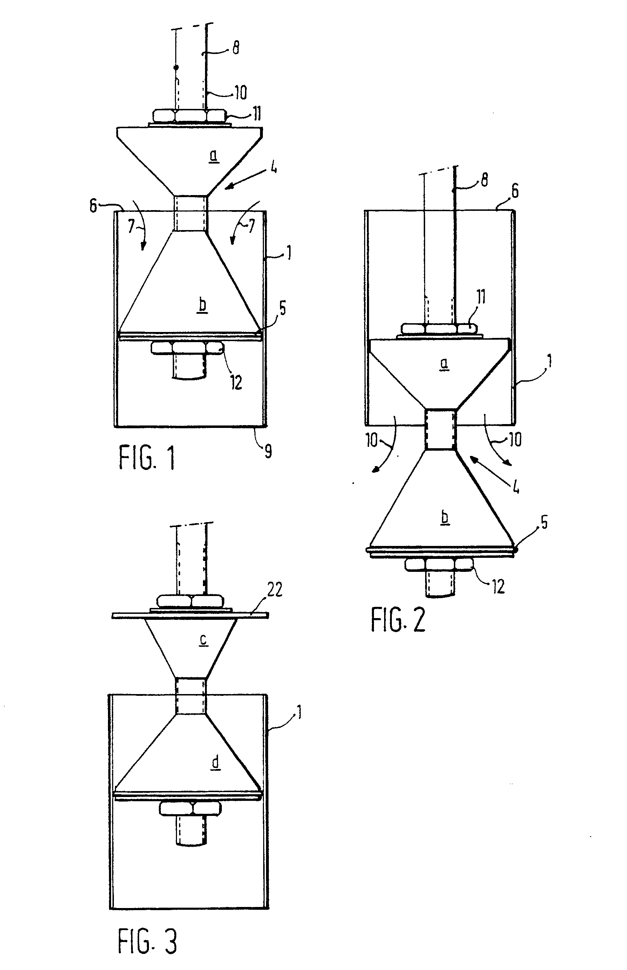

Fig. 1 shows an embodiment of a dosing apparatus according to the present invention in the filling position and Fig. 2 shows the same apparatus in the dosing position.

The dosing apparatus shown comprises a cylindrical container 1 containing an hourglass-shaped piston 4 formed of two conical bodies a and b arranged with their apices toward each other. The diameter of the circular bases of the two conical bodies is substantially equal to the internal diameter of the cylindrical container, so that a conical body contained in the container shuts off said container. If desired, additional sealing means, such as an O-ring 5, may be fitted around one or both conical bodies. To that end, a suitable peripheral groove may be provided in the sealing portion of the conical bodies. Such an O-ring also has a cleaning effect on the inner wall of the cylindrical container and, hence, may also be useful when the dosing apparatus is used for dry fodder.

Fig. 1 shows the dosing apparatus in the filling position. The fodder can flow through the open top 6 of the cylindrical container into the space between the surface of the lower conical body b and the inner wall of the cylinder, as indicated with arrows 7.

Subsequently, the hourglass-shaped piston, mounted on a piston rod 8 which, in its turn, is coupled to control means, not shown, is moved downwards into a position as indicated e.g. in Fig. 2.

As soon as the sealing portion of the lower conical body has passed the underside 9 of the cylindrical container in downward direction, the fodder present in the space between the hourglass-shaped piston and the inner wall of the cylinder can flow out of the cylindrical container, as indicated with arrows 10.

The cylindrical container should have a length at least as large as the distance between the sealing faces of the conical bodies a and b to prevent, in a given position of the piston, fodder from flowing directly along the piston through the cylinder, for in that case, the dosing effect would be lost.

The two conical bodies may form an integral unit but, preferably are constructed and mounted on piston rod 8 in such a manner that the distance between the conical bodies is adjustable. In this manner, the weight of the quantity of fodder dispensed per piston stroke can be adjusted accurately. Since the ratio between weight and volume is different for different types of fodder, a dosing apparatus can thus be adjusted to the type of fodder to be dispensed in a simple manner.

In the embodiment shown in Fig. 1 and Fig. 2, this ajustability is realized by providing the lower part of the piston rod 8 with threading 10, as also the corresponding bores in the conical bodies. Furthermore, a lock nut 11, 12 is provided for the two conical bodies. Naturally, other known methods of securing a body on a shaft or rod can be used with the same effect.

As shown in Figs. 1 and 2, the apex angle of the lower conical body need not be the same as that of the upper conical body. In general, the upper body has a relatively large apex angle to promote efficient filling of the dosing apparatus, while the cone surface of the lower body is rather steep to promote fodder outflow. This applies in particular to slop fodder and certain types of dry fodder. For pellet fodder, the apex angle of the lower conical body b is preferably larger, so that the cone surface is less steep. As a result, a better filling is possible and the risk that pellets get jammed in the tapering space between the cone surface and the wall of the cylindrical container is reduced.

Fig. 3 shows an embodiment of a dosing apparatus according to the present invention that is constructed in such a manner that when it is used for pellet fodder, the risk of jamming of pellets, which would block the apparatus, is substantially eliminated. Besides, this embodiment is also highly suitable for dosing slop fodder.

Fig. 3 again shows a cylindrical container 1 with an hourglass-shaped piston having a lower conical body d with a not very steep cone surface and an upper conical body c having a maximum diameter smaller than the internal diameter of the cylindrical container and which, for sealing relatively to the cylindrical container, is provided with a flexible disc or a large flat flexible ring 22, whose outside diameter corresponds with the diameter of the cylindrical container. The disc or ring 22 may be of rubber or a suitable synthetic plastics material. The disc or ring is adapted to fold around a fodder pellet, which would otherwise get jammed upon the downward movement of the hourglass-shaped piston precisely between the upper conical body and the edge of the cylindrical container, thereby blocking the piston.

The conical bodies are preferably made of a suitable synthetic plastics material, e.g. nylon. When a suitable material is chosen for at least the upper conical body c of Fig. 3, the ring or disc 22 may be made of the same material and be integral with the conical body.

It is observed that in view of the above, various modifications will be readily apparent to one skilled in the art. Such modifications are deemed to fall within the scope of the present claims.

## Claims

1. A dosing apparatus for fodder, in particular suitable for slop fodder, characterized by a cylinderical container (1) and an hourglass-shaped piston (4) formed of two conical bodies (a,b) arranged with their apices toward each other, said piston being reciprocatable in the container (1) by means of a piston rod (8) between a filling position wherein the space between said hourglass-shaped piston (4) and the inner wall of the container (1) can be filled with fodder and a dosing position wherein fodder contained in said space can be dispensed.

2. A dosing apparatus according to claim 1, characterized in that the conical bodies (a,b) are mounted on the piston rod (8) in such a manner that the distance between them is adjustable.

3. A dosing apparatus according to claim 1 or 2, characterized in that the piston rod (8) is threaded at least partly and that the conical bodies (a,b) have a central bore threaded correspondingly.

4. A dosing apparatus according to any of the preceding claims, characterized in that the conical bodies (a,b) are mounted so as to be interchangeable.

5. A dosing apparatus according to any of the preceding claims, characterized in that at least the lower conical body (b) is provided with sealing means coacting with the inner wall of the container.

6. A dosing apparatus according to any of the preceding claims, characterized in that the sealing means comprise an O-ring (5) mounted in a peripheral groove provided in the portion of the conical body having the largest diameter.

7. A dosing apparatus according to any of the preceding claims, characterized in that the lower conical body(b) has a relatively small apex angle.

8. A dosing apparatus according to any one of claims 1-6, characterized in that the lower conical body (d) has a relatively large apex angle and that the upper conical body(c) has a maximum diameter smaller than the diameter of the cylindrical container and is provided with a broad flexible disc or ring (22) whose circumference is adapted for sealing coaction with the inner wall of the cylindrical container (1).

9. A dosing apparatus according to any of the preceding claims, characterized in that the conical bodies (a,b) are made of synthetic plastics material.

10. A dosing apparatus according to claim 8 or 9, characterized in that the upper conical body (c) and the broad flexible disc or ring (22) form an integral unit.


## Revendications

1. Appareil pour le dosage du fourrage, en particulier approprié pour du fourrage liquide, caractérisé par un réceptacle cylindrique (1) et un piston (4) en forme de sablier, constitué de deux corps coniques (a,b) disposés avec leurs sommets l'un vers l'autre, ledit piston étant déplaçable en va-et-vient dans le réceptacle (1) au moyen d'une tige de piston (8), entre une position de remplissage, dans laquelle l'espace entre ledit piston (4) en forme de sablier et la paroi interne du réceptacle (1) peut être rempli avec du fourrage, et une position de dosage, dans laquelle le fourrage contenu dans ledit espace peut être distribué.

2. Appareil de dosage selon la revendication 1, caractérisé en ce que les corps coniques (a,b) sont montés sur la tige de piston (8) de telle façon que la distance entre eux soit réglable.

3. Appareil de dosage selon la revendication 1 ou 2, caractérisé en ce que la tige de piston (8) est filetée au moins partiellement et en ce que les corps coniques (a,b) présentent un perçage central taraudé de façon correspondante.

4. Appareil de dosage selon l'une quelconque des revendications précédentes, caractérisé en ce que les corps coniques (a,b) sont montés afin d'être interchangeables.

5. Appareil de dosage selon l'une quelconque des revendications précédentes, caractérisé en ce qu'au moins le corps conique inférieur (b) est muni de moyens d' étanchéité coopérant avec la paroi interne du réceptacle.

6. Appareil de dosage selon l'une quelconque des revendications précédentes, caractérisé en ce que les moyens d'étanchéité comprennent un joint torique (5) monté dans une gorge périphérique prévue dans la partie du corps conique ayant le plus grand diamètre.

7. Appareil de dosage selon l'une quelconque des revendications précédentes, caractérisé en ce que le corps conique inférieur (b) présente un angle au sommet relativement petit.

8. Appareil de dosage selon l'une quelconque des revendications 1-6, caractérisé en ce que le corps conique inférieur (d) présente un angle au sommet relativement grand et en ce que le corps conique supérieur (c) a un diamètre maximum plus petit que le diamètre du réceptacle cylindrique et est muni d'une bague ou d'un disque souple large (22), dont la circonférence est adaptée pour coopérer avec étanchéité avec la paroi interne du réceptacle cylindrique (1).

9. Appareil de dosage selon l'une quelconque des revendications précédentes, caractérisé en ce que les corps coniques (a,b) sont réalisés en une matière plastique synthétique.

10. Appareil de dosage selon la revendication 8 ou 9, caractérisé en ce que 1e corps conique supérieur (c) et la bague ou le disque souple large (22) forment une unité intégrante.


## Ansprüche

1. Vorrichtung zum Dosieren von Futter, insbesondere zweckmäßigerweise von Schweinetränke, gekennzeichnet durch einen zylindrischen Behälter (1) und einen stundenglasförmigen Kolben (4), der durch zwei konische Körper (a, b) gebildet ist, welche mit ihren Spitzen aufeinander zugerichtet sind, wobei der Kolben in den Behälter (1) vermittels einer Kolbenstange (8) zwischen einer Füllstellung, in welcher der Raum zwischen dem stundenglasförmigen Kolben (4) und der inneren Wandung des Behälters (1) mit Futter gefüllt werden kann, und einer Dosierstellung hin- und herbewegbar ist, in welcher sich in dem Zwischenraum befindliches Futter ausgegeben werden kann.

2. Vorrichtung nach Anspruch 1, dadurch gekennzeichnet, daß die konischen Körper (a, b) an der Kolbenstange (8) in solcher Weise befestigt sind, daß der Abstand zwischen ihnen einstellbar ist.

3. Vorrichtung nach einem der Ansprüche 1 oder 2, dadurch gekennzeichnet, daß die Kolbenstange (8) wenigstens teilweise mit einem Gewinde ausgestattet ist und daß die konischen Körper (a, b) eine zentrale Bohrung mit entsprechendem Gewinde aufweisen.

4. Vorrichtung nach einem der vorangehenden Ansprüche, dadurch gekennzeichnet, daß die konischen Körper (a, b) untereinander austauschbar befestigt sind.

5. Vorrichtung nach einem der vorangehenden Ansprüche, dadurch gekennzeichnet, daß wenigstens der untere konische Körper (b) mit einer Abdichtungseinrichtung versehen ist, die mit der inneren Wandung des Behälters (1) zusammenwirkt.

6. Vorrichtung nach einem vorangehenden Ansprüche, dadurch gekennzeichnet, daß die Dichtungseinrichtung einen 0-Ring (5) aufweist, der in einer Umfangsnut in demjenigen Teil des konischen Körpers angeordnet ist, der den größten Durchmesser aufweist.

7. Vorrichtung nach einem vorangehenden Ansprüche, dadurch gekennzeichnet, daß der untere konische Körper (b) einen relativ kleinen Spitzenwinkel aufweist.

8. Vorrichtung nach einem der Ansprüche 1 bis 6, dadurch gekennzeichnet, daß der untere konische Körper (d) einen relativ großen Spitzenwinkel hat und daß der obere konische Körper (c) sowohl einen maximalen Durchmesser hat, der kleiner ist als der Durchmesser des zylindrischen Behälters, als auch mit einer weiten flexiblen Scheibe oder einem solchen Ring (22) ausgebildet ist, deren bzw. dessen Umfang zur Dichtungswirkung mit der inneren Wandung des zylindrischen Behälters (1) ausgestaltet ist.

9. Vorrichtung nach einem vorangehenden Ansprüche, dadurch gekennzeichnet, daß die konischen Körper ( a, b) aus Kunststoffmaterial gebildet sind.

10. Vorrichtung nach einem der Ansprüche 8 oder 9, dadurch gekennzeichnet, daß der obere konische Körper (c) und die weite flexible Scheibe oder der Ring (22) als einstückige Einheit ausgebildet sind.

FIG. 1

FIG. 2

FIG. 3